# EUROPEAN PATENT APPLICATION

(11) **EP 4 797 804 A1**
(43) Date of publication of application: **26.08.2026**
(21) Application number: 24879670.8
(22) Date of filing: 11.10.2024
(51) Int. Cl.: H04W 48/10, H04W 72/0453, H04W 74/0808, H04W 84/12

(54) **COMMUNICATION DEVICE, CONTROL METHOD, AND PROGRAM**

(30) Priority: 16.10.2023 JP 2023178386
(71) Applicant: Canon Kabushiki Kaisha, Tokyo 146-8501 (JP)
(72) Inventor: YOSHIKAWA, Yuki, Tokyo 146-8501 (JP)
(74) Representative: Canon Europe Limited
(86) International application number: PCT/JP2024/036496
(87) International publication number: WO 2025/084245

(57) **Abstract**

A communication apparatus, capable of performing communication using a first channel access method that uses at least a Primary channel in one link and a second channel access method that, in a case where the Primary channel is in a busy state, uses at least one Non-Primary channel different from the Primary channel from among a plurality of channels included in the link instead of using the Primary channel, notifies another communication apparatus, which has a function of executing communication using the second channel access method, of first information usable by the other communication apparatus to determine whether or not communication using the second channel access method is permitted; and communicate with the other communication apparatus that received the first information.

## Description

### TECHNICAL FIELD

The present disclosure relates to data communication technology for a communication apparatus that can communicate using a communication link constituted by a plurality of channels.

### BACKGROUND ART

In recent years, with increases in the amount of data communication, the development of wireless local area network (LAN) communication techniques has been proceeding. The Institute of Electrical and Electronic Engineers (IEEE) 802.11 standard series is known as the main communication standard for wireless LAN. The IEEE 802.11 standard series includes standards such as IEEE 802.11a/b/g/n/ac/ax/be, and the like. Development of the IEEE 802.11bn standard as the successor to the IEEE 802.11be standard is advancing with the purpose of further improving communication reliability. In the IEEE 802.11WG (Working Group) that is establishing the IEEE 802.11bn standard, the UHR SG is scheduled to set the purpose and scope of the standard, and the TGbn is scheduled to define the specific content of the technology to be included in the standard. Note that UHR SG is an abbreviation for the Ultra High Reliability Study Group. Also, TGbn is an abbreviation for the Task Group bn.

Technology for efficiently using frequency resources in a communication method using a communication link constituted by a plurality of channels is being looked into as one of the candidate technologies to include in the IEEE 802.11bn standard. For example, with the technology described in PTL 1, in a case where a Primary Channel used for obtaining a transmission right cannot be used, another channel is used for communication.

### CITATION LIST

### PATENT LITERATURE

PTL 1: U.S. Patent No. 11696353

### SUMMARY OF INVENTION

### TECHNICAL PROBLEM

The present disclosure discloses technology that enables frequency resources to be more efficiently used in a communication system that uses a communication link constituted by a plurality of channels.

### SOLUTION TO PROBLEM

A communication apparatus according to an aspect of the present disclosure is capable of performing communication using a first channel access method that uses at least a Primary channel in one link and a second channel access method that, in a case where the Primary channel is in a busy state, uses at least one Non-Primary channel different from the Primary channel from among a plurality of channels included in the link instead of using the Primary channel, the communication apparatus including: notifying means for notifying another communication apparatus, which has a function of executing communication using the second channel access method, of first information usable by the other communication apparatus to determine whether or not communication using the second channel access method is permitted; and communicating means for communicating with the other communication apparatus that received the first information.

### ADVANTAGEOUS EFFECTS OF INVENTION

According to the present disclosure, frequency resources can be more efficiently used in a communication system that uses a communication link constituted by a plurality of channels.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating a configuration example of a wireless communication system.
FIG. 2A is a schematic view illustrating an example of a time chart of when a communication apparatus transmits data.
FIG. 2B is a schematic view illustrating an example of a time chart of when a communication apparatus transmits data.
FIG. 3 is a diagram illustrating an example of the flow when an AP notifies an STA of whether or not NPCH access can be executed.
FIG. 4 is a diagram illustrating an example of an NPCH Access element.
FIG. 5 is a diagram illustrating an example of an NPCH Operating Mode Notification Frame Action field.
FIG. 6 is a diagram illustrating an example of the flow when determining whether or not NPCH access can be executed.
FIG. 7 illustrates an example of a flowchart indicating the flow of channel access by a communication apparatus.
FIG. 8 illustrates an example of a sequence executed between communication apparatuses.
FIG. 9 is a diagram illustrating an example of the flow when determining a condition for whether or not NPCH access can be executed.
FIG. 10 is a diagram illustrating an example of an NPCH Access element.
FIG. 11 illustrates an example of a flowchart indicating the flow of channel access by a communication apparatus.
FIG. 12 is a diagram illustrating an example of the flow when determining whether or not NPCH access can be executed.
FIG. 13 is a diagram illustrating an example of the hardware configuration of a communication apparatus.
FIG. 14 is a diagram illustrating an example of the functional configuration of a communication apparatus.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### System Configuration

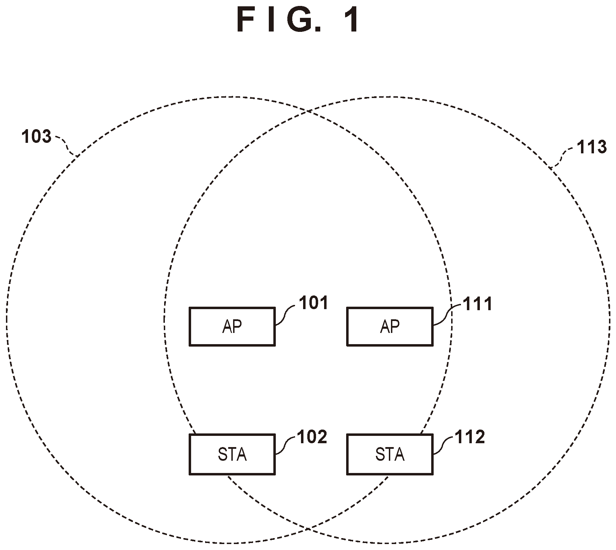

FIG. 1 illustrates a configuration example of a wireless communication system according to the present embodiment. The wireless communication system includes an access point (AP) 101 and a station (STA) 102, for example. The AP 101 and the STA 102 are each communication apparatuses that can execute wireless communication compliant with the IEEE 802.11 standard series. In the present embodiment, the AP 101 and the STA 102 may be referred to collectively as a communication apparatus 100. IEEE is an abbreviation for the Institute of Electrical and Electronics Engineers. FIG. 1 illustrates a configuration in which the STA 102 joins a network 103 established by the AP 101. The network 103 may be referred to as a Basic Service Set (BSS). In FIG. 1, a configuration in which one AP 101 and one STA 102 exist is illustrated, but for both the AP and the STA, a plurality may exist. Also, in such an example, a plurality of STAs may be connected to one AP or one STA may be connected to a plurality of APs. Note that in FIG. 1, a network 113 constituted by an AP 111 and an STA 112 exists near the network 103 constituted by the AP 101 and the STA 102. The AP 111 and the STA 112 are communication apparatuses that can execute wireless communication compliant with the IEEE 802.11 standard series in a similar manner to the AP 101 and the STA 102. For the AP 101 and the STA 102, the network 103 is the BSS that the respective apparatuses connect to and may be referred to as its own BSS. On the other hand, for the AP 101 and the STA 102, the network 113 is a network that may cause interference with its own BSS and may be referred to as an Overlapping BSS (OBSS).

In the present embodiment, the AP 101 and the STA 102 are configured to be able to execute a communication method compliant with the IEEE 802.11bn standard. The IEEE 802.11bn standard is a successor to the IEEE 802.11be standard with a purpose of 46.08 Gbps (Giga bit per second) for the maximum transmission speed. A main feature of the IEEE 802.11bn standard is that it has a function of achieving high reliability communication, low latency, improvement in throughput when the communication traffic is congested, and the like. The wireless frame used in the communication method compliant with this standard may be referred to as an Ultra High Reliability (UHR) PPDU. PPDU is an abbreviation for a PLCP Protocol Data Unit, and PLCP is an abbreviation for a Physical Layer Convergence Protocol. Note that there is a possibility of the names UHR, IEEE 802.11bn, and the like being changed to a different name after the standard has finished being established. Also, it should be noted that the scope of the present specification and the claims attached to the present specification can be applied to a communication apparatus using any and all of the successors to the IEEE 802.11be standard. Also, the communication apparatus 100 may support at least any one of the legacy standards from before the IEEE 802.11bn standard. Legacy standards include IEEE 802.11a/b/g/n/ac/ax/be, for example. Also, the communication apparatus 100 may support other communication standards, such as Bluetooth (registered trademark), NFC, UWB, ZigBee, MBOA, and the like. Note that UWB is an abbreviation for Ultra Wide band, and MBOA is an abbreviation for Multi Band OFDM Alliance. Also, NFC is an abbreviation for Near Field Communication. UWB includes wireless USB, wireless 1394, WiNET, and the like. Also, the communication apparatus 100 may support wired LAN or similar communication standards. Examples of the AP 101 include but are not limited to a wireless LAN router, a personal computer (PC), and the like. The AP 101 may be an information processing apparatus such as a radio chip that can execute wireless communication that supports the IEEE 802.11bn standard or the like. Examples of the STA 102 include but are not limited to a camera, a tablet, a smartphone, a PC, a mobile phone, a video camera, a headset, and the like. The STA 102 may be an information processing apparatus such as a radio chip that can execute wireless communication that supports the IEEE 802.11bn standard or the like.

The communication apparatus 100 may communicate using wireless signals of frequency bands including the 2.4 GHz band, the 3.6 GHz band, the 5 GHz band, the 6 GHz band, or millimeter wave bands such as the 45 GHz band and the 60 GHz band. The frequency band used by the communication apparatus 100 is not limited to these examples and may be a Sub-1 GHz band or the like. Also, the communication apparatus 100 may communicate using bandwidth such as 20 MHz, 40 MHz, 80 MHz, 160 MHz, 320 MHz, 540 MHz, 640 MHz, 1080 MHz, and 2160 MHz. The bandwidth used by the communication apparatus 100 is not limited to these examples and may be 240 MHz, 4 MHz, or the like, for example. Note that in the IEEE 802.11 standard series, a frequency channel that uses the 20 MHz bandwidth is specified as the basic channel for the 2.4 GHz, 5 GHz, 6 GHz, and similar frequency bands. Also, in the standard, a plurality of usable channels are defined for each frequency band including the 2.4 GHz band, the 5 GHz band, and the 6 GHz band. Note that in the standard, the communication apparatus 100 can use a combination of a certain channel and another adjacent channel. Using a combination of a certain channel and another adjacent channel in this manner may be referred to as channel bonding. Also, a bundle of channel formed of one or two or more channels adjacent to one another may be referred to as a communication link (link). In other words, one link formed of two channels of the 20 MHz bandwidth may use the 40 MHz bandwidth. In the IEEE 802.11be standard, 320 MHz is scheduled to be specified as the maximum bandwidth that can be used for one link. Also, the signal transmitted in the bandwidth may be consecutive on the frequency axis or may be non-consecutive. Note that the AP 101 and the STA 102 may be an AP Multi-Link Device (MLD) and a STA MLD, respectively, that support Multi-Link in which communication is performed with a plurality of link simultaneously established.

When transmitting a signal using the established link with the other communication apparatus, the communication apparatus 100 determines whether the signal can be transmitted by executing carrier sense. Carrier sense is an operation in which the communication apparatus 100 determines whether or not a signal exists on the channel that the communication apparatus 100 is trying to use for transmission. For example, the communication apparatus 100 measures the strength (received signal strength) of the signal received on the channel and, in a case where the received signal strength is greater than a predetermined threshold, determines that a signal exists on the channel (physical carrier sense). The received signal strength may also be referred to as the Received Signal Strength Indicator (RSSI). Also, the communication apparatus 100 may determine whether or not a signal exists based on information such as a Duration field included in the signal received on the channel (virtual carrier sense). For example, the communication apparatus 100 stores the time period indicated by the duration field included in the received signal in the communication apparatus 100 as a Network Allocation Vector (NAV). The communication apparatus 100 may treat the stored NAV as a time period in which the communication apparatus 100 does not transmit. In the present embodiment, the operation of setting the time period in which the communication apparatus 100 does not transmit based on information such as the duration field of the received signal by the communication apparatus 100 may be referred to as setting the NAV. In other words, in the time period up until the NAV set for the channel expires, the communication apparatus 100 determines that a signal exists on the channel. In this manner, the communication apparatus 100 determines whether or not a signal is on the channel based on the result of executing a physical carrier sense and a virtual carrier sense. In a case where the communication apparatus 100 determines that a signal exists on the channel, unavailable for transmission may be determined. The state of the channel in this case may be referred to as a busy state. On the other hand, a state in which a signal is not detected on a channel in carrier sense and the NAV is not set may be referred to as an idle state. The communication apparatus 100 may determine that it is available for transmission in a case where the channel is in an idle state.

When the communication apparatus 100 transmits using a link with a bandwidth of 160 MHz for example, the communication apparatus 100 may determine whether or not transmission can be performed using only the primary channel (PCH) with a bandwidth of 20 MHz included in the link. For example, it is described in the IEEE 802.11 standard series that, in a case where the communication apparatus 100 determines that it is available for transmission as a result of performing carrier sense on the PCH over a predetermined time period, transmission can be started. The predetermined time period is determined by an Interframe Space (IFS) set per access category used to categorize the types of communication traffic and a random number (backoff counter) randomly set from a predetermined range. In other words, in a case where the communication apparatus 100 determines that the PCH is in an idle state throughout the predetermined time period, the communication apparatus 100 obtains the transmission right for transmitting using the link. At this time, in a case where a channel other than the PCH has been in an idle state during a PIFS period preceding the transmission start, the communication apparatus 100 may use the channel and the PCH in the idle state to perform transmission via channel bonding. PIFS is an abbreviation for Priority Interframe Space. Also, in a case where the communication apparatus 100 determines that it is unavailable for transmission as a result of performing carrier sense on the PCH, even if the other channels included in the same link are in the idle state, transmission may be deferred. Note that each of the channels other than the PCH that form one link may be referred to as a secondary channel (SCH). The secondary channels may be referred to as non-primary channels (NPCH).

In the communication apparatus 100, in a case where a signal is received in a certain channel and a signal is transmitted on another channel (for example, an adjacent channel or the like) placed at a frequency near that of the certain channel, the signal being received may not be appropriately received. Consider an example where the communication apparatus 100 can simultaneously execute transmission processing and receiving processing using different channels. In a case where the communication apparatus 100 is receiving using a certain channel and then performs transmission using an adjacent channel, interference may be caused in the reception signal due to the power of the transmission signal leaking to the channel of the reception signal. Typically, such power from the transmission signal leak is much greater than the received power of the reception signal, and thus the reception signal is not appropriately received. To avoid such a situation, the IEEE 802.11 standard series is provided with a mechanism that, while the communication apparatus is transmitting a signal, ensures that there is no transmission of a signal using a channel adjacent to the PCH by another communication apparatus to the communication apparatus. In other words, it is specified that a PCH is provided as a common channel used to determine whether transmission between communication apparatuses can be performed and, while one communication apparatus is performing transmission using the PCH, the other communication apparatus does not perform transmission even if the other channels are in the idle state. Accordingly, while the communication apparatus is transmitting a signal and the PCH is being used, since another communication apparatus does not transmit a signal using a channel adjacent to the PCH, a situation in which the communication apparatus receives a signal on the adjacent channel does not occur. Accordingly, the problem of interference caused by power leakage across channels as described above can be resolved.

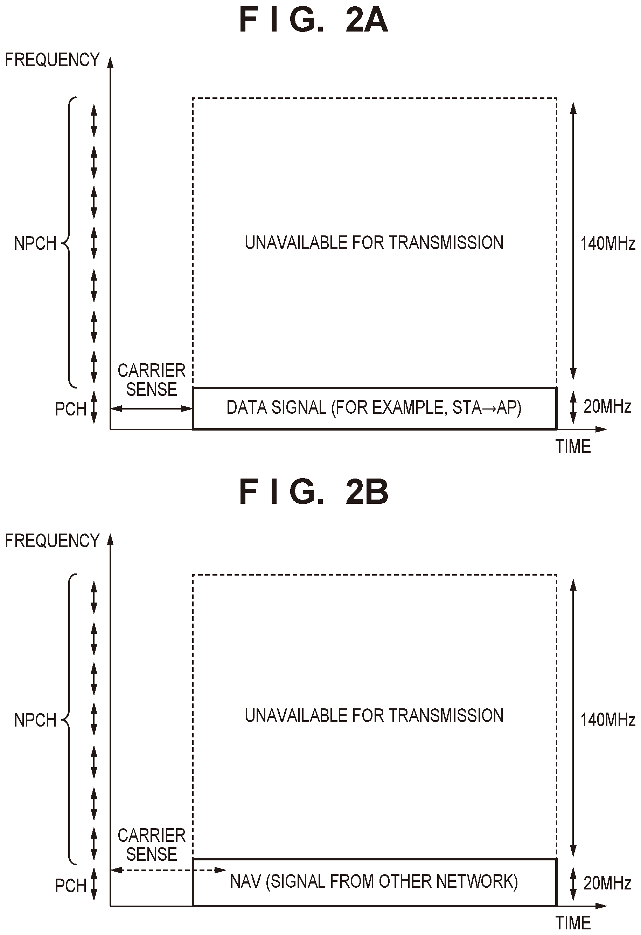

However, not using other channels (NPCH) in the idle state based on the PCH being in the busy state may hinder efficient use of the frequency resources of the entire link. FIG. 2A illustrates an example of a time chart in a case where the STA 102 transmits data to the AP 101. In FIG. 2A, after the STA 102 executes carrier sense for the PCH and confirms that the PCH is in the idle state, the STA 102 transmits data using the PCH with a 20 MHz bandwidth. In this case, for example, even if seven NPCHs other than the PCH are in the idle state, other communication apparatuses are not permitted to perform communication using the NPCHs. Also, FIG. 2B illustrates another example of a time chart in a case where the STA 102 transmits data to the AP 101. In FIG. 2B, while the STA 102 is executing carrier sense for the PCH, the PCH is being used by another network (for example, the network 113 in FIG. 1) that exists geographically near the STA 102. In this case, since it is determined that the PCH is in the busy state via carrier sense by the STA 102, for example, even if seven NPCHs other than the PCH are in the idle state, the STA 102 is not permitted to perform communication with the AP 101 using the NPCHs. However, at this time, since the AP 101 is not performing transmission, if the STA 102 performed transmission to the AP 101 using an NPCH, the AP 101 may appropriately receive a signal transmitted by the STA 102. In this manner, for example, by PCH with a bandwidth of 20 MHz being used by another network, unless the NPCH in the idle state accounting for the remaining 140 MHz are used, the frequency resources cannot be used efficiently.

In light of these circumstances, in the present embodiment, a function is provided for, in a case where the PCH is being used by another communication apparatus, performing communication between communication apparatuses using an SCH (or an NPCH) included in the same link as the PCH instead of using the PCH. For example, in a case where the PCH is in the busy state, the communication apparatus 100 sets a Secondary Primary Channel (SPCH) to use to obtain a transmission right for communicating using the NPCH. The SPCH is one or more channels from among the NPCHs included in the same link as the PCH. In a case where the communication apparatus 100 determines that the PCH is being used by another communication apparatus, the communication apparatus 100 then determines whether or not transmission can be performed using the SPCH. In a case where the communication apparatus 100 determines that it is available for transmission using the SPCH, the communication apparatus 100 performs transmission using one or more NPCHs including the SPCH. In the present embodiment, the communication method for performing transmission using one or more channels including the SPCH instead of the using the PCH is referred to as NPCH access (Non-Primary Channel Access, NPCA). Note that this communication method may be referred to by a different name. For example, this communication method may be referred to as Secondary Channel Access (SCA).

In the present embodiment, the AP 101 and the STA 102 perform communication using a first communication method using one or more channels including the PCH and a second communication method (NPCH access) using one or more NPCHs not including the PCH. For example, the AP 101 and the STA 102 have the function of executing both the first communication method and the second communication method and may perform communication using the first communication method in a case where the PCH can be used and may perform communication using the second communication method in a case where the PCH cannot be used. The PCH and the NPCH may be referred to as the first channel and the second channel, respectively. Here, even in a case where the PCH cannot be used, it may be more efficient to defer transmission until the PCH can be used without performing NPCH access. For example, if the NPCH is congested, there is a high likelihood that communication using NPCH access cannot be performed. In such a situation, it may be more efficient to perform a power save operation without attempting NPCH access. In the present embodiment, technology is provided that, in a situation where the AP 101 and the STA 102 can execute communication using NPCH access, enables whether or not to actually execute communication to be dynamically controlled.

### Example of Processing Executed in AP 101 and STA 102

Some examples of the flow of processing executed by the AP 101 and the STA 102 according to the present embodiment will be described below.

### Processing Example 1

### Notification of Information relating to NPCH Access

In the present embodiment, the AP 101 determines whether or not to execute NPCH access and notifies the STA 102 of information indicating whether or not NPCH access can be executed based on the determination result. Then, the AP 101 and the STA 102 determine the communication method to use in the communication based on the result of the determination. For example, in a case where executing NPCH access can enhance the overall system efficiency, the AP 101 may transmit a notification that NPCH access can be executed. Otherwise, the AP 101 may transmit a notification that execution of NPCH access is not permitted. This can prevent the AP 101 and the STA 102 from attempting NPCH access in a case where execution is not appropriate. Note that the AP 101 may use various criteria for enhancing the overall system efficiency. For example, in a case where the PCH and the NPCH are congested, there is a possibility that a transmission right cannot be obtained even if NPCH access is attempted. In this case, it may be more efficient in terms of energy consumption to, without attempting NPCH access, wait while performing a power save operation until the PCH is in the idle state. On the other hand, in the case of transmitting traffic corresponding to a latency requirement, the latency characteristic may be enhanced by proactively attempting NPCH access. Also, by making NPCH access not permitted to be executed in traffic without a latency requirement, the possibility of a collision between traffic corresponding to a latency requirement may be reduced and the probability of transmission of traffic corresponding to a latency requirement being successful may be increased. Also, in order to efficiently use NPCH access, NPCH access may be permitted only for communication terminals with a high communication quality to increase the success probability of NPCH access for the system overall. Also, by combining other functions such as Multi-Link communication and the like, the efficiency can be further increased. The criteria for determining whether or not the AP 101 can execute NPCH access is not limited thereto, and the present technology can be used in various applications that may be provided by dynamically switching whether or not NPCH access can be executed. Note that in the example in the following description, the AP 101 notifies the STA 102 of whether or not NPCH access can be executed, but in another example, the STA 102 may notify the AP 101. Also, all of the processing described as being executed by the AP 101 in the following description may be executed in the STA 102 provided there is no inconsistency.

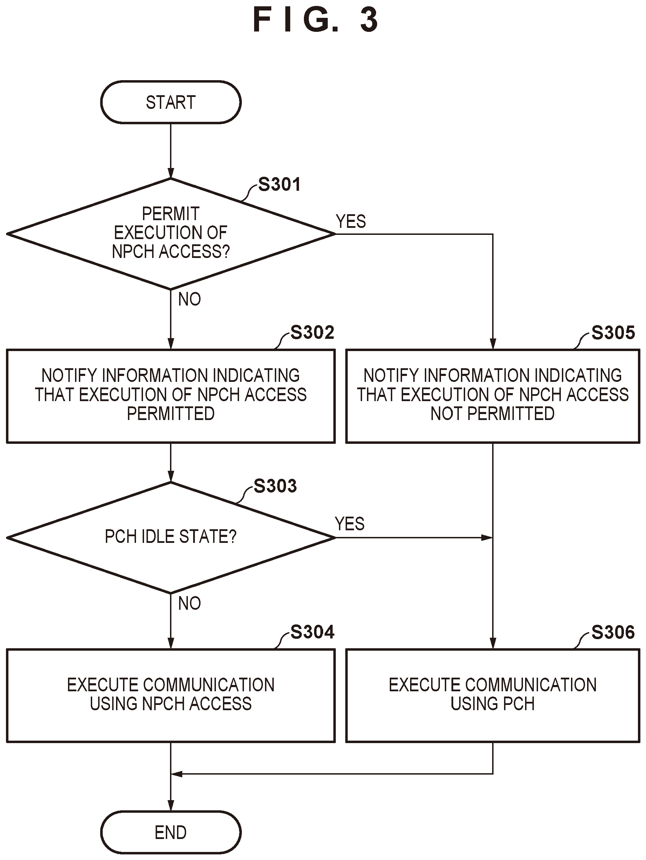

FIG. 3 illustrates the flow when the AP 101 notifies the STA 102 of whether or not NPCH access can be executed. First, the AP 101 determines whether or not execution of NPCH access is permitted (S301). The operation relating to determining whether to permit execution of NPCH access by the AP 101 will be described later. In a case where execution of NPCH access is permitted (YES in S301), the AP 101 notifies the STA 102 of information (described later) indicating that execution of NPCH access is permitted (S302). In this case, the AP 101 and the STA 102 executes either communication using the PCH or communication using NPCH access based on the result of carrier sense for the PCH. For example, in a case where the PCH is in the idle state (YES in S303), the AP 101 and the STA 102 execute communication using the PCH (S306). On the other hand, in a case where the PCH is not in the idle state (NO in S303), the AP 101 and the STA 102 execute communication using NPCH access (S304).

In S301, in a case where execution of NPCH access is not permitted (NO in S301), the AP 101 notifies the STA 102 of information indicating that execution of NPCH access is not permitted (S305). In this case, the AP 101 and the STA 102 execute communication using the PCH (S306).

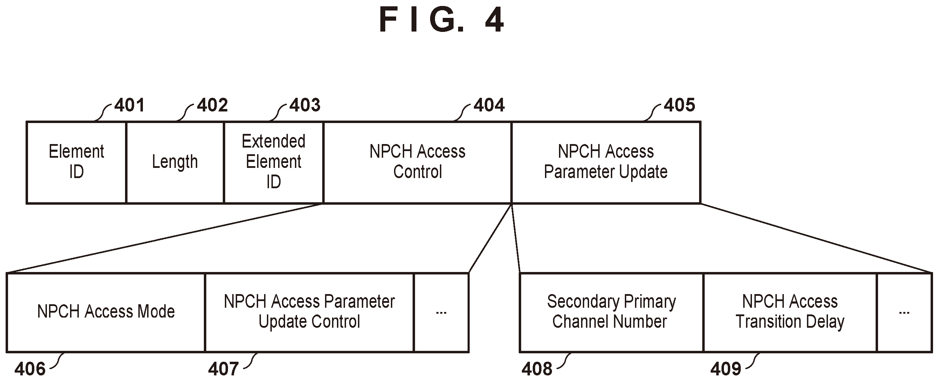

FIG. 4 illustrates an example of an information element for the AP 101 to notify the STA 102 of whether or not NPCH access can be executed. The information element may be referred to as an NPCH Access element. The information element may be referred to by a different name. For example, the AP 101 stores the NPCH Access element in a Beacon frame and transmits it to notify the STA 102 of whether or not NPCH access can be executed. By using a Beacon frame to notify of whether or not NPCH access can be executed, all of the STAs connected to the AP 101 can be notified at once. The NPCH Access element includes an Element ID field 401, a Length field 402, an Extended Element ID field 403, and an NPCH Access Control field 404. Also, the NPCH Access element may optionally include an NPCH Access Parameter Update field 405. The element type is indicated by the combination of the Element ID field 401 and the Extended Element ID field 403. For example, the value 255 may be stored in the Element ID field 401, and a value associated with the NPCH Access element may be stored in the Extended Element ID field 403. The Length field 402 indicates the length of the element.

The NPCH Access Control field 404 includes an NPCH Access Mode field 406 and an NPCH Access Parameter Update Control field 407. The NPCH Access Mode field 406 indicates whether or not NPCH access can be executed. For example, 1 is stored in this field in a case where execution of NPCH access is permitted by the AP 101. On the other hand, 0 is stored in this field in a case where execution of NPCH access is not permitted by the AP 101. By obtaining the value of the NPCH Access Mode field 406 included in the Beacon frame, for example, the STA 102 may determine whether execution of NPCH access is permitted or not permitted. Note that the method of indicating whether or not NPCH access can be executed is not limited to this method. For example, by making the value of a field relating to NPCH access, such as the NPCH Access Parameter Update field 405 described below, not zero, this may indicate that NPCH access can be executed. The NPCH Access Parameter Update Control field 407 indicates whether or not the NPCH Access Parameter Update field 405 exists. For example, in a case where the NPCH Access element includes the NPCH Access Parameter Update field 405, this field stores the value 1. On the other hand, in a case where the NPCH Access element does not include the NPCH Access Parameter Update field 405, this field stores the value 0.

The NPCH Access Parameter Update field 405 includes a Secondary Primary Channel Number field 408 and an NPCH Access Transition Delay field 409. The Secondary Primary Channel Number field 408 indicates information that can identify the NPCH (that is, the SPCH) on which carrier sense is to be performed in the case of the STA 102 executing NPCH access. For example, the Secondary Primary Channel Number field 408 stores the channel number of the SPCH. By obtaining the value of the Secondary Primary Channel Number field 408, the STA 102 may learn the channel on which carrier sense is to be performed when the STA 102 executes NPCH access. The method of designating the SPCH is not limited to using the channel number of the SPCH and, for example, may use information or the like indicating the relative position of the SPCH on a frequency axis using the PCH as a reference. Note that in a case where there are a plurality of SPCHs, the AP 101 may provide a plurality of the Secondary Primary Channel Number fields 408. In this case, the AP 101 may notify of the priority order for executing carrier sense assigned to each SPCH. By the priority order for executing carrier sense being notified, even if a plurality of SPCHs are set, NPCH access can be executed while synchronizing this between the AP 101 and the STA 102. Also, the AP 101 may provide a field for storing information indicating the priority order per SPCH and may set the place where the SPCH information is arranged in accordance with the priority order. For example, the AP 101 may arrange information relating to SPCHs with higher priority orders at positions closer to the front of the field.

The NPCH Access Transition Delay field 409 indicates the switching time required for the AP 101 to switch the channel that is the target of carrier sense. For example, the NPCH Access Transition Delay field 409 may be configured of 3 bits, and in a case where the values are 0, 1, 2, 3, 4, and 5, this indicates a switching time of 0, 16, 32, 64, 128, and 256 µsec, respectively. The STA 102 may obtain the value of the NPCH Access Transition Delay field 409 included in the Beacon frame and switch the channel on which carrier sense is to be performed in accordance with the operation of the AP 101. For example, in a case where the STA 102 has detected that the PCH is in the busy state, after the switching time has elapsed, the STA 102 may start carrier sense for the SPCH. In this manner, when the AP 101 indicates whether or not NPCH access can be executed, by information to be used in NPCH access by the STA 102 also being notified by the AP 101, the STA 102 determined to be able to execute NPCH access can swiftly execute NPCH access. When the value of the NPCH Access Mode field 406 is 0, the Secondary Primary Channel Number field 408 and the NPCH Access Transition Delay field 409 may be omitted. Also, in a case where any of the parameters do not require updating, the field corresponding to that parameter may be omitted.

Also, the AP 101 may notify the STA 102 of whether or not NPCH access can be executed using an Action frame. By using an Action frame, the determination of whether or not NPCH access can be executed by the AP 101 can be notified to the STA 102 at an appropriate time. Also, in a case where determination of whether or not NPCH access can be executed is not frequently performed, it is not efficient to continuously notify of the determination result via a periodically transmitted Beacon frame. By using an Action frame instead of a Beacon frame, transmission can be performed only when determination has been performed or when the determination result of whether or not NPCH access can be executed is different from the previous determination result. Also, by using an Action frame, the parameter to be used in NPCH access can be adjusted individually for each STA.

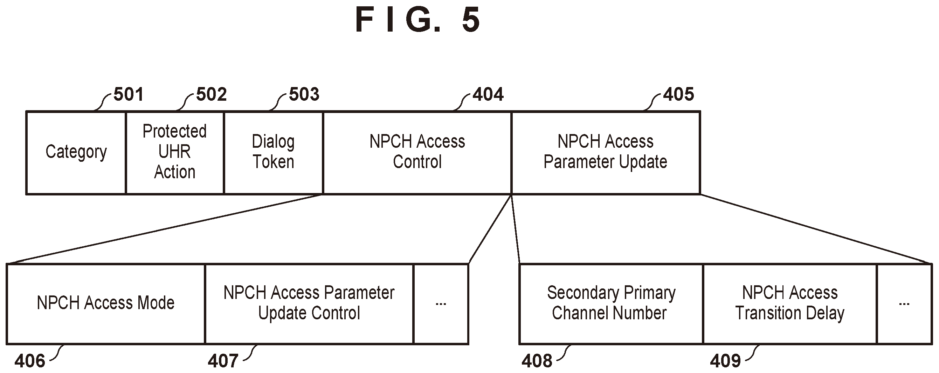

FIG. 5 illustrates an example of an Action field for notifying of whether or not NPCH access can be executed. This field may also be referred to as the NPCH Operating Mode Notification Frame Action field. This field may be referred to by a different name. This field includes a Category field 501, a Protected UHR Action field 502, a Dialog Token field 503, and the NPCH Access Control field 404. Also, the NPCH Operating Mode Notification Frame Action field may include the NPCH Access Parameter Update field 405. Here, the fields in FIG. 5 with the same role as in FIG. 4 are given the same reference number and description is omitted. The Category field 501 indicates the category of the Action field. For example, the Category field 501 stores the identification number corresponding to the Protected UHR. The Protected UHR Action field 502 indicates an identifier of the Action field in the category of the Protected UHR. For example, the Protected UHR Action field 502 stores an identification number indicating the NPCH Operating Mode Notification Frame Action field. The Dialog Token field 503 indicates an identifier for executing an information exchange sequence between the AP 101 and the STA 102. The identifier assigned by the communication apparatus on the request side is stored in the Dialog Token field 503. The communication apparatus on the response side stores the value included in the received Dialog Token field 503 in the Dialog Token field 503 of the response frame and transmits it.

Note that the STA 102 may transmit a request for execution of NPCH access to be permitted using an Action frame or the like to the AP 101. For example, the Action frame for notifying of this request may be referred to as the Non-primary Channel Access Request frame. In a case where the AP 101 receives the Non-primary Channel Access Request frame, the AP 101 determines whether or not to permit NPCH access to be executed and notifies the STA 102, the transmission source, of the determination result. The Action frame for notifying of the determination result may be referred to as the Non-primary Channel Access Response frame. By exchanging these Action frames, the STA 102 may obtain permission to execute NPCH access based on its own request. For example, in a case where traffic corresponding to a latency requirement has accumulated in the transmission buffer of the STA 102 or the like, the STA 102 may proactively obtain permission to execute NPCH access together with this status.

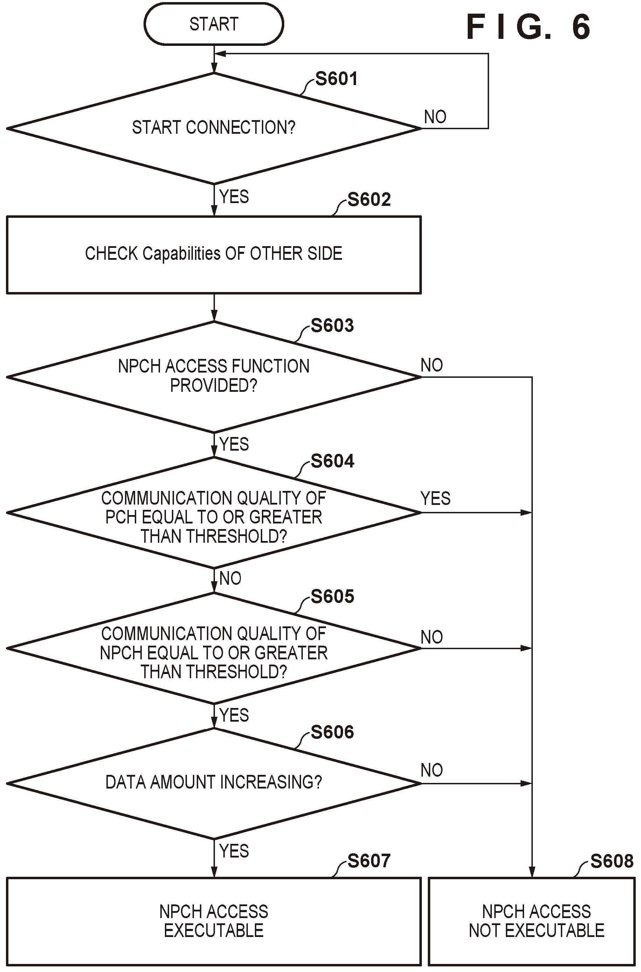

Determining Whether or not to Execute NPCH Access As described above, the AP 101 determines whether or not to execute NPCH access before transmitting an NPCH Access element. FIG. 6 illustrates an operation flow when the AP 101 determines whether or not NPCH access can be executed according to an example of the present processing. Note that the operation flow is processed by the AP 101 by a control unit 1302 reading out and executing a computer program stored in a storage unit 1301 described below via a communication procedure with the STA 102.

First, the AP 101 checks whether or not the STA 102 has the function of executing NPCH access via an association procedure with the STA 102. For example, when a connection with the STA 102 starts (YES in S601), the AP 101 obtains capability information of the STA 102 from the Probe Request frame, Association Request frame, or the like received from the STA 102 (S602). For example, the AP 101 may obtain the capability information of the STA 102 based on the Capabilities element included in these frames. Note that the capability information relating to a function newly specified in the IEEE 802.11bn standard may be specified as a UHR Capabilities element. The AP 101 determines whether or not the STA 102 has the function of executing NPCH access based on the capability information obtained from the STA 102 (S603). In a case where the STA 102 does not have the function of executing NPCH access (NO in S603), the AP 101 determines not to use NPCH access with the STA 102 (S608). On the other hand, in a case where the STA 102 has the function of executing NPCH access (YES in S603), the AP 101 stores that NPCH access can be executed with the STA 102.

Then, the AP 101 determines whether or not to permit execution of NPCH access. In the example described here, the AP 101 determines whether or not to permit NPCH access based on the communication quality of the PCH and the communication quality of the NPCH and the amount of communication traffic accumulated for the AP 101 and the STA 102. First, the AP 101 determines whether the communication quality of the PCH is equal to or greater than a threshold (S604). For example, the AP 101 measures the channel utilization ratio for the PCH and compares this with a predetermined threshold. For example, in a case where the measured channel utilization ratio is greater than the predetermined threshold, the AP 101 determines that the communication quality of the channel is less than the threshold. The channel utilization ratio may be represented by a percentage of the time that the channel is in the busy state per unit time. In a case where the communication quality of the PCH is equal to or greater than the threshold (YES in S604), the AP 101 determines not to execute NPCH access (S608). On the other hand, in a case where the communication quality is less than the threshold (YES in S604), the AP 101 compares the communication quality of the NPCH with the predetermined threshold (S605). In a case where the communication quality of the NPCH access is less than the threshold (NO in S605), the AP 101 determines not to execute NPCH access (S608). On the other hand, in a case where the communication quality of the NPCH is equal to or greater than the threshold (YES in S605), the AP 101 determines the communication traffic buffer status for the AP 101 and the STA 102 (S606). For example, the AP 101 may obtain the communication traffic buffer status for the STA 102 by requesting the STA 102 for a notification of buffer status of the transmission buffer. Also, in a case where the AP 101 periodically calculates a total value or an average value of the data amount accumulated by the AP 101 and the STA 102 and a change over time is greater than a predetermined threshold and increasing, the AP 101 may determine that the accumulated data amount is increasing. In a case where the accumulated data amount is increasing (YES in S606), the AP 101 determines that NPCH access can be executed (S607). On the other hand, in a case where the accumulated data is not increasing (NO in S606), the AP 101 determines not to execute NPCH access (S608). The AP 101 notifies the STA 102 of whether or not NPCH access can be executed. Then, the AP 101 and the STA 102 executes communication based on the determination by the AP 101.

The method of the AP 101 determining whether or not NPCH access can be executed is not limited to this example. For example, in the example illustrated in FIG. 6 described above, both the communication quality of the PCH and the communication quality of the NPCH are used. However, the AP 101 may determine whether or not to execute NPCH access based on either the communication quality of the PCH or the communication quality of the NPCH. To evaluate the communication quality of a channel, the channel utilization ratio is used, for example. In a case where the PCH utilization ratio is high due to a plurality of other wireless networks using the same PCH as the network 103 existing in the surroundings, even by waiting until the PCH in the busy state becomes the idle state, there is no guarantee that a transmission right can be obtained at the next chance. Accordingly, in a case where the PCH utilization ratio is high, the AP 101 may determine to execute NPCH access. In a case where the PCH utilization ratio is low, the AP 101 may determine to wait until the PCH is in the idle state. On the other hand, in a case where the NPCH utilization ratio is high, there is a high possibility that the percentage of NPCH in the busy state is high and NPCH access cannot be executed. Thus, the AP 101 may determine to wait until the PCH is in the idle state without executing NPCH access. While waiting, a power save operation may be performed. Also, in a case where the NPCH utilization ratio is low, the AP 101 may determine to execute NPCH access. By the AP 101 and the STA 102 executing NPCH access, the transmission waiting time is reduced and the data transmission latency is reduced. Note that the communication quality of a channel may be the signal-to-Interference-plus-Noise Ratio (SINR), the average throughput, or the average delay for the AP 101 or the like. Also, the criteria for the AP 101 to determine whether or not to execute NPCH access is not limited to the communication quality of the PCH and the NPCH. For example, whether or not NPCH access can be executed may be determined based on the type (application, category, or the like) of data described below, whether there is another function such as Multi-Link, and the like. The AP 101 may determine whether or not NPCH access can be executed using a combination of the communication quality of these channels and other criteria.

In a case where the AP 101 determines whether or not NPCH access can be executed based on the communication quality of the channel, the AP 101 executes processing for identifying the communication quality of the PCH or the NPCH. For example, the AP 101 may identify the PCH utilization ratio based on the percentage of the amount of time the signal power is detected to be greater than a predetermined threshold per unit time via monitoring of the PCH. Also, the AP 101 may identify the SINR from the RSSI of a signal received from the STA 102 communicating with the AP 101 and the RSSI of another signal (in other words an interference signal). In a similar manner, the AP 101 may identify the communication quality for each of the NPCHs. Also, the AP 101 may identify the communication quality by causing the STA 102 to measure communication quality, obtaining the result, and performing an analysis using the communication quality calculated by the AP 101 and the communication quality obtained from the STA 102. For example, the AP 101 may request the STA 102 to measure the communication quality of the SPCH. The STA 102 may execute measurement of the communication quality of the SPCH based on the request from the AP 101 and provide the measurement result to the AP 101. For example, the AP 101 may request the STA 102 to perform measurement using a Measurement Request element. The Measurement Request element may include information for identifying the NPCH to be measured, items to be measured, measurement period (measurement start time and measurement end time or the like), number of measurements, measurement cycle, and the like. For example, in a case where a plurality of SPCHs are set for the NPCH, the AP 101 may designate whether to target all of the SPCHs, target a portion of the SPCHs, target all of the NPCHs for measurement, or the like. For example, the AP 101 may designate an NPCH for measurement using a bitmap corresponding to each of the channels of the NPCHs. In this case, the bit corresponding to an NPCH to be measured may be set to 1, and the bit corresponding to an NPCH not to be measured may be set to 0. Note that the AP 101 may execute measurement of all of the NPCHs to be measured and may re-set NPCHs with a high communication quality as SPCHs. On the other hand, in the case of limiting the measurement targets, the load on the STA 102 executing the measurement is reduced. After executing measurement, the STA 102 may notify the AP 101 of the measurement result using a Measurement Report element, for example. For example, the Measurement Report may include information identifying the NPCH that was measured, the measurement result, the measurement period, the number of measurements, the measurement cycle, and the like. The measurement item and the measurement result may be the channel utilization ratio, the SINR, or the like. The method of the AP 101 requesting the STA 102 to measure the communication quality of the NPCH and the method of obtaining the measurement result are not limited to these examples. Also, the AP 101 may request the STA 102 to measure the communication quality of the PCH in a similar manner to the measurement of the communication quality of the NPCH.

The AP 101 may request the STA 102 to notify it of the buffer status of the communication traffic of the STA 102. The AP 101 may determine whether or not to execute NPCH access based on the buffer status of the communication traffic of each STA 102. For example, in a case where the average value of the accumulated communication traffic of each STA 102 is greater than a predetermined threshold, the AP 101 may determine to execute NPCH access. By permitting communication via NPCH access, the AP 101 can cause the early transmission of communication traffic accumulated by the STA 102 and may alleviate a decrease in the latency characteristic. Also, the AP 101 may permit NPCH access only for the STA 102 with communication traffic that is greater than the threshold. In this case, the AP 101 may notify each STA 102 with an NPCH Access element using an Action frame.

### NPCH Access via Communication Apparatus

The STA 102 determines whether or not NPCH access can be executed based on information relating to whether or not NPCH access can be executed notified from the AP 101 and performs communication with the AP 101 using the first communication method or the second communication method. For example, the STA 102 obtains the value of the NPCH Access Mode field 406 included in the Beacon frame or Action frame received from the AP 101. In a case where the value is 1, the STA 102 may determine that execution of NPCH access is permitted, and in a case where the value is 0, the STA 102 may determine that execution of NPCH access is not permitted. Also, the STA 102 obtains the value of the Secondary Primary Channel Number field 408 and the NPCH Access Transition Delay field 409 included in the Beacon frame or the like. The STA 102 sets the parameter to be used in NPCH access based on these values and executes communication with the AP 101. The operations when the communication apparatus 100 according to the present embodiment transmits data will be described below using the STA 102 as an example. The operations are not limited to the STA 102 and are also applicable to the AP 101.

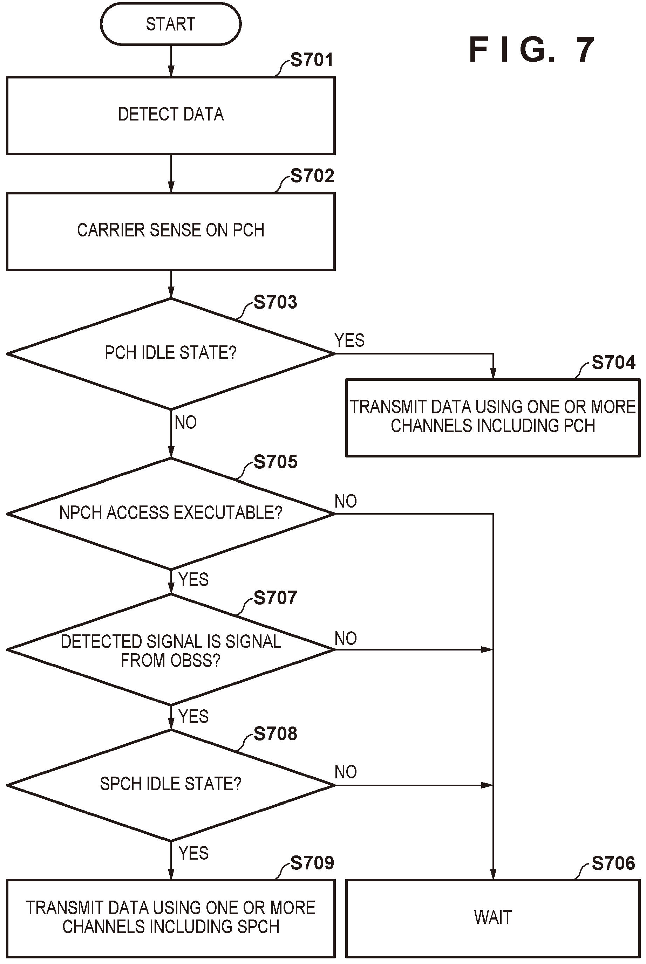

FIG. 7 illustrates an example of the flow when the communication apparatus 100 according to the present embodiment transmits data. When the STA 100 detects that data has accumulated in its own transmission queue (S701), to transmit this data, the STA 100 starts the channel access procedure. First, the STA 102 performs carrier sense on the PCH (S702). The STA 102 measures the backoff counter and determines whether or not the PCH is in the idle state. In a case where the PCH is determined to be in the idle state (YES in S703), the STA 102 transmits the signal using one or more channels including the PCH (S704). Note that the STA 102 may execute carrier sense of the NPCH throughout a predetermined time period after determining that the PCH is in the idle state. Also, the STA 102 may execute carrier sense of the NPCH in parallel with carrier sense of the PCH. The STA 102 may determine the channel to use in transmission based on the result of the carrier sense performed for each of the PCH and the NPCH and may transmit a signal. For example, the STA 102 may transmit a signal using the PCH and one or more NPCHs determined to be in the idle state.

In a case where the STA 102 has detected a signal on the PCH via carrier sense (NO in S703), the STA 102 sets the NAV for the PCH using the time period indicated in the Duration field included in the received signal. Then, the STA 102 checks whether or not execution of NPCH access is permitted. For example, in a case where execution of NPCH access is not permitted (NO in S705), the STA 102 waits until the PCH is in the idle state (S706). On the other hand, in a case where execution of NPCH access is permitted (YES in S705), the STA 102 determines whether or not the signal detected on the PCH is a signal transmitted from a communication apparatus belonging to the network 103. For example, the STA 102 may determine whether the signal is a signal from its own BSS or a signal from an OBSS based on whether or not the BSS Color field included in the received signal matches the BSS Color of its own BSS. Also, the STA 102 may determine whether the signal is a signal from its own BSS or a signal from an OBSS based on whether or not a value stored in a destination field, a source field, or the like included in the received signal matches a parameter of its own BSS. For example, in a case where the signal detected on the PCH is a signal from an OBSS, (YES in S707), the STA 102 executes NPCH access. On the other hand, in a case where the signal detected on the PCH is a signal from its own BSS (NO in S707), the STA 102 determines not to execute NPCH access and waits until the PCH is in the idle state (S706).

In the case of executing NPCH access, the STA 102 executes carrier sense on the SPCH. In a case where a signal is not detected on the SPCH, the STA 102 measures the backoff counter in a similar manner to the carrier sense for the PCH and determines whether or not the SPCH is in the idle state. In a case where the STA 102 determines that the SPCH is in the idle state (YES in S708), the STA 102 transmits a signal using one or more NPCHs including the SPCH (S709). Note that the STA 102 may execute carrier sense of another NPCH throughout a predetermined time period after determining that the SPCH is in the idle state. The STA 102 may determine the channel to use in transmission based on the result of the carrier sense performed for each of the SPCH and the other NPCHs and may transmit a signal. On the other hand, in a case where the STA 102 detects a signal on the SPCH (NO in S708), the STA 102 cancels NPCH access and defers transmission until the NAV time period set for the PCH expires (S706). Note that in a case where a plurality of SPCHs are set, the STA 102 may continue the NPCH access procedure until all of the SPCHs are confirmed to be in the busy state. In a case where all of the SPCHs are in the busy state, the STA 102 defers the transmission until the NAV time period set for the PCH has expired. Note that even in a case where execution of NPCH access is permitted, the STA 102 may defer transmission until the NAV time period of the PCH has expired without executing NPCH access. For example, in a case where the remaining battery amount of the STA 102 is less than a threshold, where NPCH access is set not to be executed via input from a user, or the like, the STA 102 may defer transmission until the NAV time period of the PCH has expired without executing NPCH access. In this case, the STA 102 may perform the minimum reception operation required for transmitting using NPCH access that may be executed by the AP 101. For example, the STA 102 may cause only the processing circuits that can only detect reception signals for the SPCH to operate and cause the other circuits to perform a power save operation.

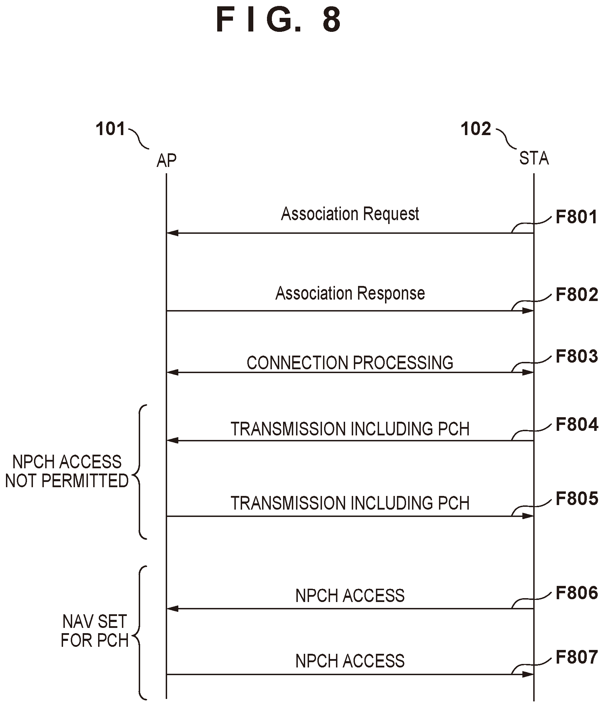

FIG. 8 illustrates an example of a sequence between the AP 101 and the STA 102 according to the present embodiment. First, the AP 101 and the STA 102 execute the association procedure (F801 and F802). For example, between the apparatuses, an Association Request and an Association Response or the like are exchanged. Capability information relating to NPCH access is shared via a UHR Capabilities element included in the Association Request and the Association Response, and then the connection processing is complete (F803). The AP 101 and the STA 102 transmit and receive data based on the NPCH access capability information and the determination of whether or not NPCH access can be executed notified or obtained from one another. For example, in a case where execution of NPCH access is not permitted, the AP 101 and the STA 102 perform communication via the first communication method including the PCH (F804 and F805). On the other hand, in a case where execution of NPCH access is permitted, the AP 101 and the STA 102 select either the first communication method or the second communication method depending on the status of the PCH and perform communication. In a case where a NAV is set for the PCH, for example, communication is performed using NPCH access (the second communication method) (F806 and F807).

In this manner, in the present embodiment, in a case where the AP 101 and the STA 102 can communicate using NPCH access, the AP 101 determines whether or not NPCH access can be executed and notifies the STA 102 of the determination result. The AP 101 and the STA 102 determine whether or not NPCH access may be executed based on the notification and select the communication method to use for the communication. Accordingly, whether or not to execute NPCH access can be determined and communication can be efficiently executed in terms of frequency resources and power consumption using the communication method appropriate depending on the radio environment or the like.

### Processing Example 2

In the method according to Processing Example 1 described above, the AP 101 determines whether or not NPCH access can be executed, and the STA 102 determines the communication method to use in communication based on the determination result. In the present processing example, the AP 101 generates a condition to be satisfied when executing NPCH access and notifies the STA 102 of the condition. For example, the AP 101 may use, as a condition to be satisfied when executing NPCH access, the traffic being communicated corresponding to a predetermined type, the communication quality of a channel used in NPCH access being equal to or greater than a predetermined threshold, or the like.

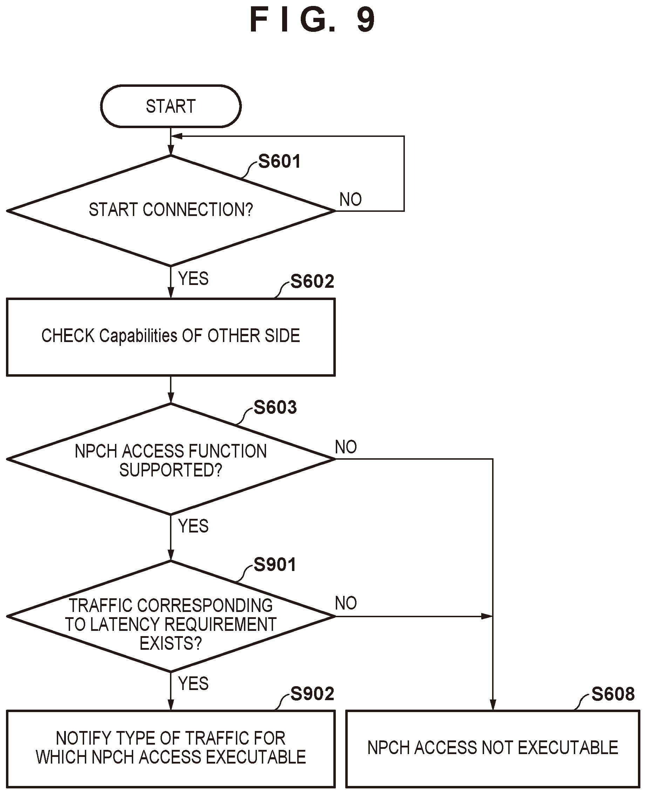

FIG. 9 illustrates the operation flow when the AP 101 according to the present processing example generates a condition to be satisfied when executing NPCH access and notifies the STA 102 of the condition. In the example illustrated in FIG. 9, the AP 101 can execute NPCH access using communication traffic, corresponding to a predetermined latency requirement, as the condition. In other words, for traffic corresponding to a latency requirement such as audio data, image data, and the like, by permitting NPCH access, even in a situation where the PCH is congested, the AP 101 performs control so that the latency requirement of the data are satisfied. Note that the traffic corresponding to a latency requirement may include time-critical data for robot control or the like and data that affects user experience such as print jobs and image sharing. In the operation flow of FIG. 9, the operations shared with FIG. 6 are given the same reference number and descriptions thereof are omitted. First, the AP 101 executes the procedure of S601 to S603 and checks whether or not the STA 102 has the function of executing NPCH access. Then, the AP 101 determines whether or not traffic corresponding to a latency requirement is included in the traffic communicating with the STA 102 (S901). For example, the AP 101 may determine whether or not traffic corresponding to a latency requirement is included based on an identifier (TID) indicating the type of traffic assigned to the traffic communicating with the STA 102, an access category, and the like. Also, the AP 101 may determine whether there is a traffic latency requirement based on the communication parameter exchanged via negotiation or the like executed with the STA 102. In a case where traffic corresponding to a latency requirement is included in the communication with the STA 102 (YES in S901), the AP 101 may notify the STA 102 that NPCH access can be executed using corresponding to the traffic as the condition (S902). On the other hand, in a case where traffic corresponding to a latency requirement is not included (NO in S901), the AP 101 may notify the STA 102 that NPCH access cannot be executed (S608).

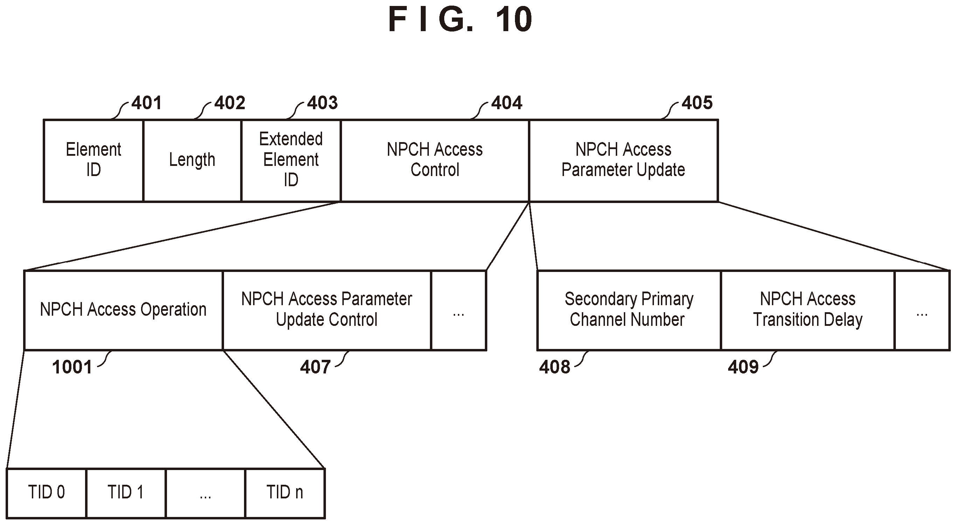

For example, FIG. 10 illustrates an example of an Information Element for notifying of a condition to be satisfied when executing NPCH access generated in the AP 101. The information element is another example of an element that may be referred to as an NPCH Access element. In FIG. 10, the NPCH Access element includes the Element ID field 401, the Length field 402, the Extended Element ID field 403, and the NPCH Access Control field 404. Also, the NPCH Access element may optionally include the NPCH Access Parameter Update field 405. The fields in FIG. 10 with the same role as in FIG. 4 are given the same reference number and description is omitted. In other words, the difference between the information element of FIG. 10 and the information element of FIG. 4 is that an NPCH Access Operation field 1001 is disposed instead of the NPCH Access Mode field 406. The NPCH Access Operation field 1001 indicates a condition to be satisfied when executing NPCH access generated in the AP 101. For example, FIG. 10 illustrates an application example of the traffic communicated corresponding to a predetermined type being the condition to be satisfied when executing NPCH access. Here, each bit constituting the NPCH Access Operation field 1001 may correspond to respective Traffic Identifiers (TIDs) for identifying the type of the traffic communicated. The TIDs may be associated with each of the types (audio traffic, image traffic, best-effort traffic, and the like) being communicated between the AP 101 and the STA 102. The TIDs may be associated with Access Categories and individual applications (print job, image sharing, and the like). Also, the AP 101 may categorize the types of traffic communicated using a different method. In this case, the NPCH Access Operation field 1001 may be configured in accordance with a categorization method by the AP 101. The AP 101 according to the present embodiment determines whether or not NPCH access can be executed for each TID and sets the corresponding bit to each TID. For example, the AP 101 sets the bit corresponding to the TID for permitting NPCH access to be executed to 1 and sets the bit corresponding to the TID for not permitting NPCH access to be executed to 0. For example, by permitting NPCH access for traffic with a latency requirement set such as audio traffic and video traffic, the AP 101 may perform control so that such traffic can be transmitted early even if the PCH cannot be used. Also, the AP 101 may perform control so that NPCH access is permitted for traffic that affects the user experience such as print job and image sharing, for example.

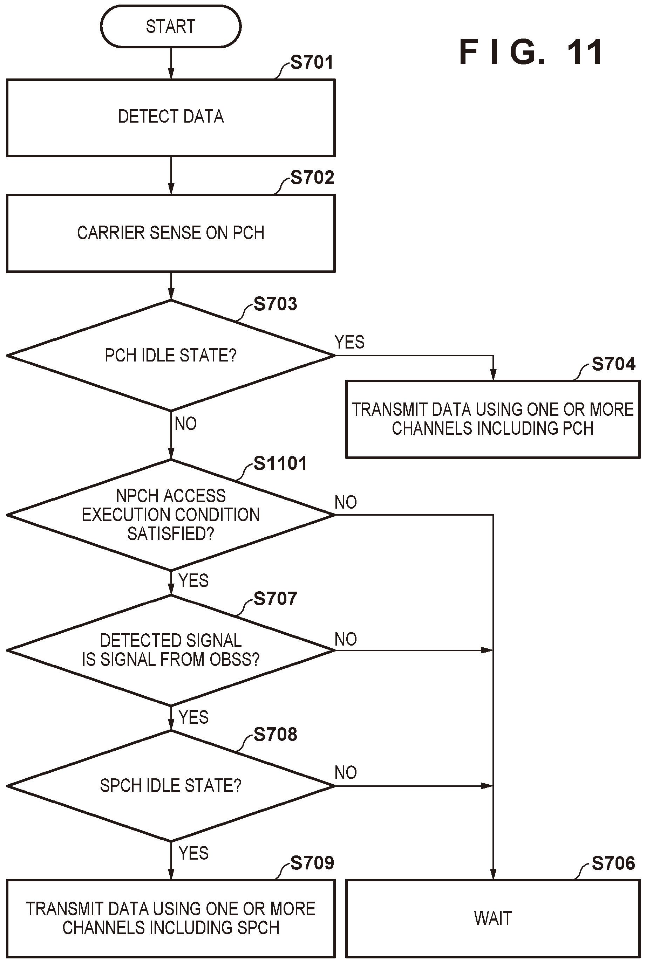

FIG. 11 illustrates an example of the flow when the STA 102 transmits data according to the present processing example. In FIG. 11, the operations shared with FIG. 7 are given the same reference number and description thereof are omitted. When the STA 102 detects that data has accumulated in the STA 102, the STA 102 executes carrier sense on the PCH and determines the signal detection status for the PCH (S701 to S703). In a case where the PCH is in the busy state, the STA 102 determines whether or not the data trying to be transmitted satisfies an NPCH access execution condition (S1101). For example, by receiving the NPCH Access Operation field 1001 included in the Beacon frame received from the AP 101, the STA 102 obtains the condition to be satisfied when executing NPCH access. Also, for example, by determining whether or not the TID of the data accumulated in the STA 102 is a TID that permits NPCH access, the STA 102 determines whether or not the condition to be satisfied when executing NPCH access has been satisfied. In a case where the STA 102 determines that the TID of the data accumulated in the STA 102 is a TID that permits NPCH access (YES in S1101), the STA 102 may transmit the data using NPCH access (S707 to S709). On the other hand, in a case where the STA 102 determines that the NPCH access execution condition is not satisfied (NO in S1101), the STA 102 does not execute NPCH access (S706).

The AP 101 may use a condition other than communication traffic corresponding to a predetermined latency requirement as the condition to be satisfied when executing NPCH access. For example, as the condition to be satisfied when executing NPCH access, the AP 101 may set the communication quality of the channel to be used in NPCH access being equal to or greater than a predetermined threshold. For example, as the parameter for determining the communication quality of the channel, the AP 101 may set the RSSI of the signal received from the AP 101 by the STA 102, the SINR of the STA 102, the packet error rate, the packet retransmission rate, and channel utilization ratio, and the like. For example, in a case where the RSSI or the SINR is low or a case where the packet error rate or the packet retransmission rate is high, there is a high possibility that communication will fail if NPCH access is performed. By permitting NPCH access giving priority to the STA with a higher possibility of successful communication, the frequency resources can be effectively used. The AP 101 may store the thresholds for the RSSI, the SINR, the packet error rate, the packet retransmission rate, the channel utilization ratio, and the like in the NPCH Access Operation field 1001 and transmit them. By receiving the NPCH Access Operation field 1001, the STA 102 obtains various types of thresholds as the condition to be satisfied when executing NPCH access. The STA 102 compares the RSSI of the signal received from the AP 101, the SINR calculated using the RSSI of the interference signal, and these thresholds to determine whether or not the condition to be satisfied when executing NPCH access is satisfied. Also, the STA 102 may compare the error rate or retransmission rate measured for the signal transmitted by the STA 102 using the PCH or the NPCH and these thresholds to determine whether or not the condition to be satisfied when executing NPCH access is satisfied. Note that the STA 102 may measure the channel utilization ratio of the SPCH and compare this with the threshold to determine whether or not the condition to be satisfied when executing NPCH access is satisfied. Note that since the signals that can be received via the SPCH are different depending on the physical position of each communication apparatus, there is a possibility that the channel utilization ratio measured for each STA is different. Control may be performed in such a manner that, by the AP 101 providing a threshold and each STA individually performing a determination, the STAs with a high possibility of success are prioritized for executing NPCH access.

Note that the applicable conditions for the condition to be satisfied when the AP 101 executes NPCH access are not limited to the examples described above. For example, the AP 101 may use the buffer status of traffic in the STA 102 for the condition. For example, as the condition to be satisfied when executing NPCH access, the AP 101 may notify of a threshold for the amount of data accumulated in the transmission buffer of the STA 102, the number of packets, and the like. By performing control to prioritize execution of NPCH access by the STAs with much communication traffic accumulated, the accumulation of traffic in the STA may be resolved. In this case, the AP 101 stores the threshold for the amount of data accumulated in the buffer, the number of packets, and the like in the NPCH Access Operation field 1001 and notifies the STA 102 of this.

In this manner, in the present embodiment, the AP 101 generates a condition to be satisfied when executing NPCH access and notifies the STA 102 of the condition. The STA 102 determines whether or not NPCH access may be executed by determining whether or not the STA 102 or the traffic of the STA 102 will satisfy the notified condition. By causing STAs that require data to be transmitted early and STAs with a relatively high possibility of communication success to execute NPCH access, the frequency resources can be effectively used. Note that a combination of conditions to be satisfied when executing NPCH access described above may be used. Also, conditions other than those described above may be used. In this case, a number of fields equals to the number of conditions may be provided in the NPCH Access Operation field 1001. Note that the NPCH Access Operation field 1001 may perform transmission using an Action frame. In this case, the NPCH Access Operation field 1001 is stored instead of the NPCH Access Mode field 406 in FIG. 5. In a case where the condition to be satisfied when executing NPCH access is periodically notified using a Beacon frame, this information is periodically transmitted even if the condition is not updated. However, by using an Action frame, an update to the condition is able to be notified of only when this happens, enabling the frequency resources to be used effectively. Also, the NPCH Access Mode field 406 and the NPCH Access Operation field 1001 may be included in a single element or field. In this case, when the NPCH Access Mode field 406 is set to 1, the setting of the NPCH Access Operation field 1001 may be enabled. Since the STA 102 analyzes the content of the NPCH Access Operation field 1001 only when the NPCH Access Mode field 406 is set to 1, the processing load is able to be reduced.

### Processing Example 3

The IEEE 802.11be standard specifies a communication method (Multi-Link communication) that uses a plurality of links in parallel referred to as a Multi-Link Operation function. In a case where the communication apparatus 100 can execute Multi-Link communication in addition to NPCH access, the communication apparatus 100 may use Multi-Link communication and NPCH access in parallel. In the present processing example, a function is provided for determining whether or not to use NPCH access based on whether or not the AP 101 and the STA 102 can execute Multi-Link communication.

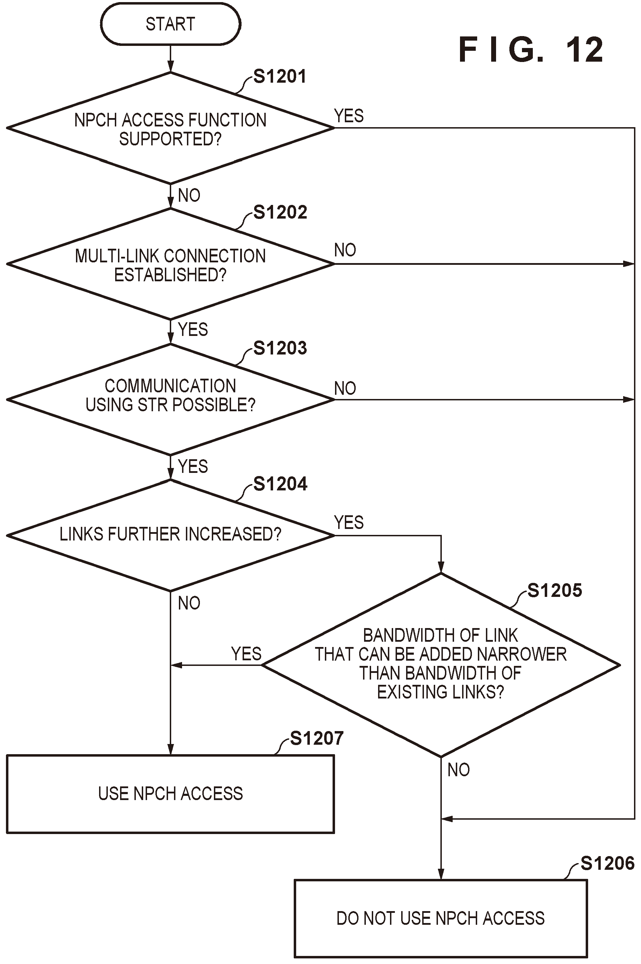

FIG. 12 illustrates an example of the flow when determining whether or not it is appropriate to use NPCH access according to the present processing example. The present flow may be executed in the AP 101, for example. Note that the present flow may be executed by the STA 102 or may be executed while the AP 101 and the STA 102 are communicating. In the example of the present flow described below, the AP 101 executes the present flow. First, the AP 101 determines whether or not the STA 102 has the function of executing NPCH access (S1201). For example, the AP 101 may check whether or not the STA 102 has the function of executing NPCH access by exchanging a Capabilities element or the like in the procedure performed when establishing a link with the STA 102. In a case where the STA 102 does not have the function of executing NPCH access (NO in S1201), the AP 101 determines not to use NPCH access (S1206). On the other hand, in a case where the STA 102 has the function of executing NPCH access (YES in S1201), the AP 101 determines whether or not a Multi-Link connection has been established with the STA 102 (S1202). For example, the AP 101 may determine whether or not there is a Multi-Link connection by checking whether a plurality of links are already established or only a single link is established with the STA 102. In a case where a Multi-Link connection is not established (NO in S1202), the AP 101 determines not to use NPCH access (S1206). In a case where a Multi-Link connection is established (YES in S1202), the AP 101 determines whether or not communication using the STR method in the Multi-Link connection established with the STA 102 can be performed (S1203). STR is an abbreviation for Simultaneous Transmit and Receive. The STR method is a communication method in which signals are simultaneously transmitted and received independently via a plurality of links which do not cause interference with one another. In other words, in a case where the AP 101 can independently use a link to use for NPCH access and another link different from this link, the AP 101 can communicate the information required for control of NPCH access using the other link. In a case where communication using the STR method cannot be performed via these links, there is a possibility that communication via other links and NPCH access may create interference or restrictions on each other. In a case where Multi-Link communication using the STR method cannot be performed (NO in S1203), the AP 101 determines not to use NPCH access (S1206). On the other hand, in a case where Multi-Link communication using the STR method can be performed (YES in S1203), the AP 101 determines whether or not to further increase the links (S1204). For example, in the case of further increasing the links, adding new links enables the required communication to be performed without using NPCH access. For example, the AP 101 may determine whether or not a new link can be added by checking whether or not, in addition to having a wireless processing function used in the Multi-Link communication already established with the STA 102, a wireless processing function that can be used in establishing a new link is provided. In a case where the links are not further increased (YES in S1204), the AP 101 determines to use NPCH access (S1207). In a case where the links are further increased (YES in S1204), the AP 101 determines whether or not the bandwidth of the link that can be added is narrower than the bandwidth of the existing links (S1205). In a case where the bandwidth of the link that can be added is narrower than the bandwidth of the existing links, in some cases, using NPCH access may result in faster communication being executed. In a case where the bandwidth that can be added is narrower than the bandwidth of the existing links (YES in S1205), the AP 101 determines to use NPCH access (S1207). In a case where the bandwidth that can be added is wider than the bandwidth of the existing links (NO in S1205), the AP 101 determines to use NPCH access (S1206).

In this manner, in the present processing example, in a case where Multi-Link communication and NPCH access may be used in parallel between communication apparatuses, whether or not NPCH access is used is determined based on interference between Multi-Link communication and NPCH access and the bandwidth that each can use. In this manner, interference between Multi-Link communication and NPCH access and restrictions can be avoided, and the frequency utilization frequency can also be enhanced. The method of determining whether or not to use NPCH access in a case where Multi-Link communication and NPCH access may be used in parallel between the communication apparatuses is not limited to this example. Whether or not each of Multi-Link communication and NPCH access can be executed may be dynamically determined in accordance with the communication quality of each of the links of the Multi-Link, the traffic status, and the like. Also, whether or not to execute NPCH access may be switched for each of the links of the Multi-Link.

### Apparatus Configuration

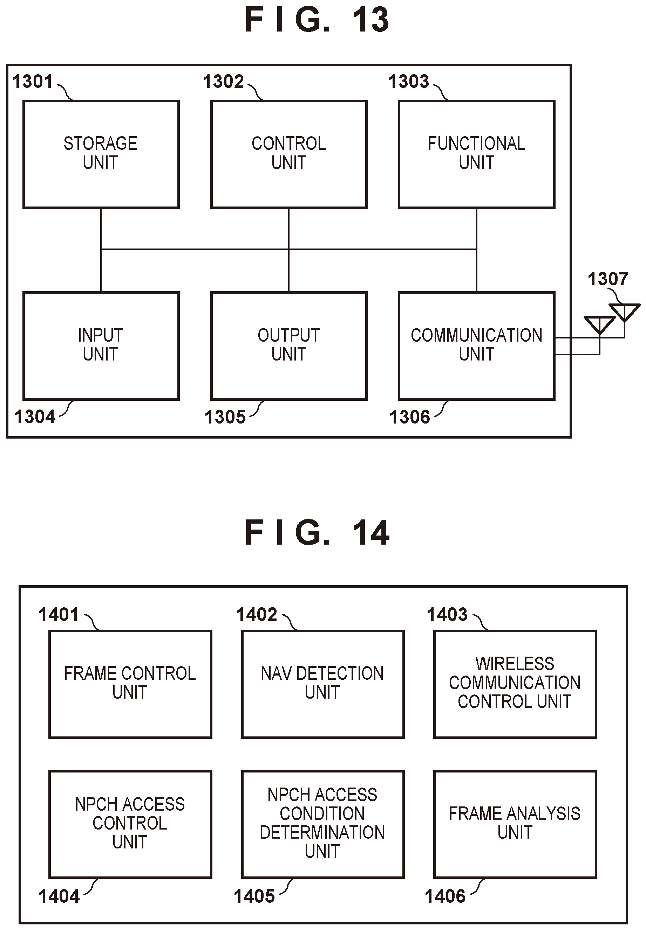

FIG. 13 illustrates a hardware configuration example of the communication apparatus 100 (the AP 101 and the STA 102) according to the present embodiment. The communication apparatus 100, as an example of the hardware configuration, includes the storage unit 1301, the control unit 1302, a functional unit 1303, an input unit 1304, an output unit 1305, a communication unit 1306, and an antenna 1307, for example. The communication apparatus 100 may include a plurality of antennas.

The storage unit 1301 is constituted by one or more memories including a ROM, a RAM, or the like and may store various types of information including control programs for the functional units constituting the communication apparatus 100 to perform various types of operations, parameters for communication, and the like. ROM is an abbreviation for Read Only Memory, and RAM is an abbreviation for Random Access Memory. The storage unit 1301 may be configured to include, in addition to a memory such as ROM and RAM, a flexible disk, a hard disk, an optical disk, a magneto-optical disk, a CD-ROM, a CD-R, magnetic tape, a non-volatile memory card, a DVD, and other similar storage media.

The control unit 1302, for example, is constituted by one or more processors including a CPU, a MPU, or the like and controls the entire communication apparatus 100 by executing the control programs stored in the storage unit 1301. Note that the control unit 1302 may control the entire communication apparatus 100 via cooperation between the control programs stored on the storage unit 1301 and an Operating System (OS). Note that CPU is an abbreviation for Central Processing Unit, and MPU is an abbreviation for Micro Processing Unit. In a case where the control unit 1302 includes a plurality of processors that may be implemented by multicores or the like, the control unit 1302 may be configured in a manner such that the entire communication apparatus 100 is controlled by the plurality of processors.

Also, the control unit 1302 controls the functional unit 1303 and executes predetermined processing such as communication, image capture, printing, projecting, and the like. The functional unit 1303 is hardware for the communication apparatus 100 to execute the predetermined processing described above. For example, in a case where the apparatus is a camera, the functional unit 1303 is an image capture unit that executes image capture processing. Also, for example, in a case where the apparatus is a printer, the functional unit 1303 is a printing unit that executes printing processing. In a case where the apparatus is a projector, the functional unit 1303 is a projecting unit and executes projecting processing.

The input unit 1304 receives various types of operations from a user. The output unit 1305 outputs various types of output to a user via a monitor screen or a speaker, for example. In this example, output via the output unit 1305 may correspond to displaying on a monitor screen, outputting audio via a speaker, outputting vibrations, and the like. Note that the input unit 1304 and the output unit 1305 may be implemented together as one module such as in the case of a touch panel. Also, the input unit 1304 and the output unit 1305 may each be an apparatus integrally formed with the communication apparatus 100 or may each be separate apparatuses.

The communication unit 1306 performs control of wireless communication compliant with the IEEE 802.11bn standard. Also, the communication unit 1306 may perform control of wireless communication compliant with other legacy standards such as other IEEE 802.11 standard series in addition to the IEEE 802.11bn standard. The communication unit 1306 controls the antenna 1307 and transmits and receives signals for wireless communication generated by the control unit 1302. The communication unit 1306 is a so-called radio chip, and this may be provided with one or more processors and memories. Note that in a case where the communication apparatus 100 supports NFC standards, Bluetooth standards, and similar wireless communication standards and wired LAN and similar wired communication in addition to the IEEE 802.11bn standard, the communication unit 1306 may perform control of communication compliant with these communication standards. Also, in a case where the communication apparatus 100 can execute wireless communication that complies with a plurality of communication standards, the communication apparatus 100 may have a configuration in which a communication unit that supports each of the communication standards and an antenna are provided separately. The communication apparatus 100 communicates data with the partner communication apparatus via the communication unit 1306. Note that the antenna 1307 may be separately formed from the communication unit 1306 or may be formed as a single module together with the communication unit 1306. In a case where the communication apparatus 100 is configured to simultaneously perform carrier sense for a plurality of SPCHs, the communication apparatus 100 may be provided with the required number of communication units 1306.

The antenna 1307, for example, is an antenna that can communicate at the 2.4 GHz band, the 5 GHz band, the 6 GHz band, millimeter waves, and the like. In FIG. 13, the illustrated configuration of the communication apparatus 100 includes the two antennas 1307, but the communication apparatus 100 may include one or three or more antennas or may include one or more antennas for each frequency band usable by the apparatus. Also, in a case where the communication apparatus 100 includes a plurality of antennas, the communication apparatus 100 may include the communication unit 1306 for each antenna.

### Functional Configuration

FIG. 14 illustrates an example of the functional configuration of the communication apparatus 100. The functional configuration according to the present embodiment, for example, is an example of a functional configuration implemented by the one or more processors executing programs stored in the one or more memories. The communication apparatus 100 includes a frame control unit 1401, a NAV detection unit 1402, a wireless communication control unit 1403, an NPCH access control unit 1404, an NPCH access condition determination unit 1405, and a frame analysis unit 1406.

The frame control unit 1401 generates signals (frames) when communication is performed with the partner communication apparatus. The frame control unit 1401, for example, generates a frame for the AP 101 to notify the STA 102 of information (first information) that can be used to determine whether or not NPCH access may be executed. For example, the frame control unit 1401 generates a Beacon frame including an NPCH Access element for notifying of whether or not NPCH access can be executed and of a condition to be satisfied when NPCH access is executed. The frame control unit 1401 may generate an Action frame including an NPCH Operating Mode Notification Frame Action field. Also, the frame control unit 1401 generates a frame for the AP 101 to request for information (second information) that can be used to determine whether or not NPCH access can be executed and to generate a condition to be satisfied when NPCH access is executed. For example, the frame control unit 1401 may generate an Action frame including a Measurement Request element. On the other hand, the frame control unit 1401 generates a frame for the STA 102 to provide to the AP 101 information that can be used to determine whether or not the AP 101 can execute NPCH access and to generate a condition to be satisfied when NPCH access is executed. For example, the frame control unit 1401 may generate an Action frame including a Measurement Report element.

The NAV detection unit 1402 sets the NAV for the PCH or the SPCH based on the value for Duration extracted by the frame analysis unit 1406. The wireless communication control unit 1403 executes transmission processing of each frame generated by the frame control unit 1401. Also, the wireless communication control unit 1403 notifies the frame analysis unit 1406 of the frame received via the antenna 1307. For example, the wireless communication control unit 1403 may execute transmission or reception of a data frame using either the first communication method or the second communication method. For example, the wireless communication control unit 1403 executes carrier sense of the PCH when transmitting a data frame. In a case where there has been detection of a signal on the PCH or the NAV has been set in the NAV detection unit 1402, the wireless communication control unit 1403 may execute carrier sense for the SPCH based on a determination of whether or not NPCH access can be executed in the NPCH access condition determination unit 1405. In a case where a signal has not been detected on the SPCH and the NAV is not set for the SPCH by the NAV detection unit 1402, for example, the wireless communication control unit 1403 transmits a data frame using one or more NPCHs including the SPCH. The SPCH control unit 1404 executes setting and control for performing NPCH access. The SPCH control unit 1404 sets the channel number for the SPCH, the priority order for carrier sense execution, and the like based on the parameter included in the NPCH Access Parameter Update field 405, for example. Note that the SPCH control unit 1404 may perform setting and control using setting information required to execute NPCH access that is exchanged at the time a link is established between the AP 101 and the STA 102. The NPCH access condition determination unit 1405 determines whether or not NPCH access may be executed. For example, the NPCH access condition determination unit 1405 in the AP 101 performs a determination of whether or not NPCH access can be executed and a generation of a condition to be satisfied when NPCH access is executed based on the communication quality of the NPCH, the buffer status of the traffic in the STA 102, and the like. Also, the NPCH access condition determination unit 1405 requests the STA 102 for the second information required to determine whether or not NPCH access can be executed and to generate a condition to be satisfied when NPCH access is executed. The NPCH access condition determination unit 1405 in the STA 102 determines whether or not NPCH access may be executed based on the first information extracted from the NPCH Access element or the like. Also, the NPCH access condition determination unit 1405 provides the AP 101 with the second information required for the AP 101 to determine whether or not NPCH access can be executed and to generate a condition to be satisfied when NPCH access is executed. The frame analysis unit 1406 may obtain the information required for communication by analyzing the frame received from the partner communication apparatus. For example, the frame analysis unit 1406 in the STA 102 obtains the information (first information) that can be used to determine whether or not NPCH access may be executed from a Beacon frame or an Action frame. Also, the frame analysis unit 1406 in the AP 101 obtains the information (second information) that can be used to determine whether or not NPCH access can be executed from the Action frame including the Measurement Report element. The second information may also be used to generate the condition to be satisfied when executing NPCH access. Note that the frame analysis unit 1406, by analyzing the received frame, may obtain the Duration value and notify the NAV detection unit 1402 of the value.

As described above, according to the present embodiment, communication using the NPCH can be executed based on carrier sense for the SPCH even in a case where the PCH cannot be used. Accordingly, the link frequencies can be efficiently used, and the communication capacity provided by the wireless communication system is increased. Also, according to the present embodiment, whether or not to execute NPCH access is determined based on the communication quality of the PCH and the NPCH, the buffer status of the traffic of the communication apparatuses, and the like. Accordingly, in a case where the success rate of NPCH access is high, communication is needed to be performed early, or the like, NPCH access can be executed. Otherwise, communication that is appropriate to the situation, such as performing a power save operation, can be performed. Note that in the present embodiment described above, communication is performed between the AP 101 and the STA 102. However, the present technology may also be applied to a plurality of STAs. Also, in the present embodiment described above, the communication method that does not use the PCH is referred to as NPCH access. However, no such limitation is intended, and this communication method may be referred to as Secondary Primary channel access or the like, for example. In the present embodiment described above, a channel for determining whether transmission can be performed using the NPCH is referred to as SPCH for the sake of convenience. However, no such limitation is intended. Since the term refers to a CH with a high priority for determining whether transmission can be performed from among the plurality of secondary channels, it may be referred to as PSCH (Primary Secondary Channel). In the case of using either term, channel means a channel to be used for determining whether transmission can be performed using the NPCH. Also, the names for the information elements and various types of fields according to the present embodiment may be referred to by different names. In the present embodiment described above, whether or not NPCH access can be executed is determined in accordance with the communication quality of the channels and the buffer status of the traffic in the communication apparatuses. However, whether or not NPCH access can be executed may be determined based on different information.

The present invention may be implemented by providing a program that implements one or more of the functions of the embodiment described above to a system or a device via a network or a storage medium and the program being read out and executed by one or more processors in a computer of the system or device. Also, the present invention may be implemented by a circuit (for example, ASIC) that implements one or more of the functions.

The present invention is not limited to the above embodiments and various changes and modifications can be made within the spirit and scope of the present invention. Therefore, to apprise the public of the scope of the present invention, the following claims are made.

The present application claims priority from Japanese Patent Application No. 2023-178386 filed on October 16, 2023, which is hereby incorporated by reference herein.

## Claims

1. A communication apparatus capable of performing communication using a first channel access method that uses at least a Primary channel in one link and a second channel access method that, in a case where the Primary channel is in a busy state, uses at least one Non-Primary channel different from the Primary channel from among a plurality of channels included in the link instead of using the Primary channel, the communication apparatus comprising:
notifying means for notifying another communication apparatus, which has a function of executing communication using the second channel access method, of first information usable by the other communication apparatus to determine whether or not communication using the second channel access method is permitted; and
communicating means for communicating with the other communication apparatus that received the first information.

2. The communication apparatus according to claim 1, **characterized in that** the first channel access method is a Primary channel access method for accessing a channel based on a result of carrier sense for the Primary channel, and
the second channel access method is a Non-Primary channel access method for accessing a channel based on a result of carrier sense for the Non-Primary channel.

3. The communication apparatus according to claim 1, **characterized in that** the Primary channel is a Primary channel specified based on one standard in IEEE 802.11 standard series, and
the Non-Primary channel is a Non-Primary channel specified based on at least one standard in IEEE 802.11 standard series.

4. The communication apparatus according to claim 1, wherein
the first information includes information indicating that the other communication apparatus is permitted or not permitted to execute communication using the second channel access method.

5. The communication apparatus according to claim 1, wherein
the first information includes information indicating a condition to be satisfied when the other communication apparatus executes communication using the second channel access method.

6. The communication apparatus according to claim 1, wherein
the notifying means periodically performs notification of the first information using a Beacon frame specified in IEEE 802.11 standard series.

7. The communication apparatus according to any one of claims 1 to 6, wherein
the notifying means performs notification of the first information using an Action frame specified in IEEE 802.11 standard series.

8. The communication apparatus according to any one of claims 1 to 7, further comprising:
obtaining means for obtaining second information usable to generate the first information from the other communication apparatus.

9. The communication apparatus according to claim 8, wherein
the second information includes information for identifying a communication quality of the Non-Primary channel.

10. The communication apparatus according to claim 8, wherein
the second information includes information for identifying a buffer status of communication traffic of the other communication apparatus.

11. A communication apparatus capable of performing communication using a first channel access method that uses at least a Primary channel in one link and a second channel access method that, in a case where the Primary channel is in a busy state, uses a Non-Primary channel different from the Primary channel from among a plurality of channels included in the link instead of using the Primary channel, the communication apparatus comprising:
obtaining means for obtaining first information usable to determine whether or not communication using the second channel access method is permitted, from another communication apparatus;
determining means for determining, using the first information, whether or not communication using the second channel access method is permitted; and
communicating means for communicating data with the other communication apparatus based on a result of the determining.

12. The communication apparatus according to claim 11, **characterized in that**
the first channel access method is a Primary channel access method for accessing a channel based on a result of carrier sense for the Primary channel, and
the second channel access method is a Non-Primary channel access method for accessing a channel based on a result of carrier sense for the Non-Primary channel.

13. The communication apparatus according to claim 11, **characterized in that**
the Primary channel is a Primary channel specified based on one standard in IEEE 802.11 standard series, and
the Non-Primary channel is a Non-Primary channel specified based on at least one standard in IEEE 802.11 standard series.

14. The communication apparatus according to claim 11, wherein
the first information includes information indicating that the communication apparatus is permitted or not permitted to execute communication using the second channel access method.

15. The communication apparatus according to claim 11, wherein
the first information includes a condition to be satisfied when the communication apparatus executes communication using the first channel access method.

16. The communication apparatus according to any one of claims 11 to 15, wherein
the obtaining means periodically obtains the first information from a Beacon frame specified in IEEE 802.11 standard series.

17. The communication apparatus according to any one of claims 11 to 15, wherein
the obtaining means obtains the first information from an Action frame specified in IEEE 802.11 standard series.

18. The communication apparatus according to any one of claims 11 to 17, further comprising:
providing means for providing, to the other communication apparatus, second information usable by the other communication apparatus to generate the first information.

19. The communication apparatus according to claim 18, wherein
the second information includes information for identifying a communication quality of the Non-Primary channel.

20. The communication apparatus according to claim 18, wherein
the second information includes information for identifying a buffer status of communication traffic of the communication apparatus.

21. A control method executed by a communication apparatus capable of performing communication using a first channel access method that uses at least a Primary channel in one link and a second channel access method that, in a case where the Primary channel is in a busy state, uses at least one Non-Primary channel different from the Primary channel from among a plurality of channels included in the link instead of using the Primary channel, the control method comprising:
notifying another communication apparatus, which has a function of executing communication using the second channel access method, of first information usable by the other communication apparatus to determine whether or not communication using the second channel access method is permitted; and
communicating with the other communication apparatus that received the first information.

22. A control method executed by a communication apparatus capable of performing communication using a first channel access method that uses at least a Primary channel in one link and a second channel access method that, in a case where the Primary channel is in a busy state, uses a Non-Primary channel different from the Primary channel from among a plurality of channels included in the link instead of using the Primary channel, the control method comprising:
obtaining first information usable to determine whether or not communication using the second channel access method is permitted, from another communication apparatus;
determining, using the first information, whether or not communication using the second channel access method is permitted; and
communicating data with the other communication apparatus based on a result of the determining.

23. A program to be executed by a computer provided in a communication apparatus capable of performing communication using a first channel access method that uses at least a Primary channel in one link and a second channel access method that, in a case where the Primary channel is in a busy state, uses at least one Non-Primary channel different from the Primary channel from among a plurality of channels included in the link instead of using the Primary channel, the program causing the computer to:
notify another communication apparatus, which has a function of executing communication using the second channel access method, of first information usable by the other communication apparatus to determine whether or not communication using the second channel access method is permitted; and communicate with the other communication apparatus that received the first information.

24. A program to be executed by a computer provided in a communication apparatus capable of performing communication using a first channel access method that uses at least a Primary channel in one link and a second channel access method that, in a case where the Primary channel is in a busy state, uses a Non-Primary channel different from the Primary channel from among a plurality of channels included in the link instead of using the Primary channel, the program causing the computer to:
obtain first information usable to determine whether or not communication using the second channel access method is permitted, from another communication apparatus;
determine, using the first information, whether or not communication using the second channel access method is permitted; and
communicate data with the other communication apparatus based on a result of the determining.
